# EUROPEAN PATENT APPLICATION

(11) **EP 4 520 912 A2**
(43) Date of publication of application: **12.03.2025**
(21) Application number: 24221688.5
(22) Date of filing: 19.12.2024
(51) Int. Cl.: E06B 9/262, E06B 9/266

(54) **HONEYCOMB CURTAIN AND MANUFACTURING METHOD THEREOF**

(30) Priority: 12.09.2024 CN 202411282060
(71) Applicant: Hangzhou Qiaowei Technology Co., Ltd, Hangzhou, Zhejiang 310051 (CN)
(72) Inventor: XU, Shengping, Hangzhou,, 310051 (CN); LI, Xiaoyi, Hangzhou, 310051 (CN)
(74) Representative: Zaboliene, Reda

(57) **Abstract**

The present application provides a honeycomb curtain and a manufacturing method thereof. The honeycomb curtain includes at least one first fabric layer (1) and at least one second fabric layer (2). Each first fabric layer (1) includes multiple sequentially connected first folding units (11), and a first folding edge (12) is provided at a connection position of every two adjacent first folding units; each second fabric layer (2) includes multiple sequentially connected second folding units (21), and a second folding edge (22) is provided at a connection position of every two adjacent second folding units; the multiple first folding units (11) correspond one-to-one with the multiple second folding units (21), and the first folding edges (12) correspond one-to-one with the second folding edges (22); each first folding edge (12) is connected to a corresponding second folding edge (22), and each first folding unit (11) is enclosed with a corresponding second folding unit (21) to form a hollow cavity (10). The honeycomb curtain not only has a simple structure and manufacturing process, but also the structure is stable and reliable, improving the production efficiency and service life.

## Description

### TECHNICAL FIELD

This application relates to the field of curtain structure technology, and in particular, to a honeycomb curtain and its manufacturing method.

### BACKGROUND

The honeycomb curtain is also called the organ curtain. As its name implies, it is similar to the three-dimensional shape of an accordion in appearance and resembles a honeycomb. The biggest advantage of the honeycomb curtain is that it can meet the needs of various types of family windows. Whether it is a corner window, an elliptical arc window, a floor-to-ceiling window, an inclined roof window, or even an overhead skylight, the honeycomb curtain can cover them with a layer of gorgeous clothing, and its unique honeycomb structure can store air in the hollow layer and keep the indoor temperature constant.

The honeycomb curtain generally includes a curtain rod, a foldable curtain body, and a drawstring, etc. The curtain body consists of multiple sequentially connected folding units. Each folding unit of the curtain body has a through hole. The drawstring passes through the through holes on the folding units, and the hanging end of the curtain body is retracted or lowered using the drawstring, so that the folding units can be folded together or unfolded, thereby achieving the opening and closing of the honeycomb curtain.

### TECHNICAL PROBLEM

The current honeycomb curtains generally have the following disadvantages: the curtain body of the honeycomb curtain is generally formed by bonding multiple quadrilateral or hexagonal unit curtain bodies together (specific reference can be made to patents such as CN212939344U), which not only has complex manufacturing processes and low production efficiency, but also easily deviates the position between the upper and lower unit curtain bodies during bonding, and is prone to delamination during long-term use, thereby affecting the beauty and service life of the honeycomb curtain.

### TECHNICAL SOLUTION

The object of the present application is to provide a honeycomb curtain, its structure and manufacturing process are simple, and the structure is stable and reliable, improving the production efficiency and service life.

The present application provides a honeycomb curtain including at least one first fabric layer and at least one second fabric layer, wherein the first fabric layer and the second fabric layer are arranged opposite to each other along a thickness direction of the honeycomb curtain;
each first fabric layer includes multiple sequentially connected first folding units, the first folding units bend and protrude towards the side away from the second fabric layer, and a first folding edge is provided at a connection position of every two adjacent first folding units;
each second fabric layer includes multiple sequentially connected second folding units, the second folding units bend and protrude towards the side away from the first fabric layer, and a second folding edge is provided at a connection position of every two adjacent second folding units;
the multiple first folding units correspond one-to-one with the multiple second folding units, and the first folding edges correspond one-to-one with the second folding edges; each first folding edge is connected to a corresponding second folding edge, and each first folding unit is enclosed with a corresponding second folding unit to form a hollow cavity.

In an achievable manner, the multiple first folding units are arranged sequentially along a first direction, the multiple second folding units are arranged sequentially along the first direction, the first folding edges and the second folding edges extend along a second direction, wherein the first direction is perpendicular to the second direction.

In an achievable manner, one of the first direction and the second direction is a width direction of the honeycomb curtain, and the other is a length direction of the honeycomb curtain.

In an achievable manner, the cross-section of the first folding units is V-shaped or trapezoidal, and the cross-section of the second folding units is V-shaped or trapezoidal.

In an achievable manner, each first folding unit and a corresponding second folding unit have a symmetrical structure.

In an achievable manner, each first folding unit and a corresponding second folding unit have an asymmetric structure.

In an achievable manner, each first folding edge is connected to a corresponding second folding edge through ultrasonic bonding, hot pressing, or adhesive bonding.

In an achievable manner, there are multiple first fabric layers and multiple second fabric layers, wherein the multiple first fabric layers are arranged adjacent to each other along the thickness direction, and the first folding units on the multiple first fabric layers correspond one-to-one with each other; the multiple second fabric layers are arranged adjacent to each other along the thickness direction, and the second folding units on the multiple second fabric layers correspond one-to-one with each other.

In an achievable manner, there is a first gap between corresponding first folding units of every two adjacent first fabric layers, and there is a second gap between corresponding second folding units of every two adjacent second fabric layers.

The present application further provides a manufacturing method of a honeycomb curtain, used for manufacturing a honeycomb curtain as described above, the manufacturing method of the honeycomb curtain includes the following steps:
S 10: providing at least one first fabric layer and at least one second fabric layer; wherein the first fabric layer includes multiple first body portions and multiple first bonding portions, the multiple first body portions and the multiple first bonding portions are alternately arranged along a first direction, and the first bonding portions extend along a second direction; the second fabric layer includes multiple second body portions and multiple second bonding portions, the multiple second body portions and the multiple second bonding portions are alternately arranged along the first direction, and the second bonding portions extend along the second direction; the multiple first body portions respectively correspond to the multiple second body portions, and the multiple first bonding portions respectively correspond to the multiple second bonding portions; the first direction is perpendicular to the second direction;
S20: connecting each first bonding portion to a corresponding second bonding portion, and bending each first body portion and each second body portion so that each first body portion and a corresponding second body portion are bent and protruded in opposite directions to form a hollow cavity therebetween, thus obtaining a honeycomb curtain; wherein the first body portion forms the first folding unit after bending and protruding, and the first bonding portion corresponds to the first folding edge; the second body portion forms the second folding unit after bending and protruding, and the second bonding portion corresponds to the second folding edge.

In an achievable manner, in step S20, each first bonding portion is connected to the corresponding second bonding portion through ultrasonic bonding, hot pressing, or adhesive bonding.

In an achievable manner, in step S20, bending each first body portion and each second body portion specifically includes:
placing a mold between each first body portion and the corresponding second body portion, and heating the mold to a preset temperature, so that the first body portion and the second body portion are pushed apart by the mold, and the first body portion and the second body portion are shaped under the heating action of the mold.

In an achievable manner, in step S20, bending each first body portion and each second body portion specifically includes:
bending each first body portion and each second body portion using a bending device, so that each first body portion and each second body portion are bent, and heating and shaping the first body portion and the second body portion using the bending device.

### BENEFICIAL EFFECTS

The honeycomb curtain provided in this application includes a first fabric layer and a second fabric layer. The first folding edges of the first fabric layer are respectively connected to the second folding edges of the second fabric layer, and the first folding units and the corresponding second folding units are enclosed to form hollow cavities, thereby forming the curtain body of the honeycomb curtain. The honeycomb curtain is composed of a first fabric layer and a second fabric layer connected to each other. Compared with the traditional structure of the multiple quadrilateral or hexagonal unit curtain bodies bonded together, the honeycomb curtain has better structural integrity, not only the structure is stable and reliable, improving the service life of the honeycomb curtain, but also the production process is greatly simplified, improving the production efficiency and saving the production costs.

### BRIEF DESCRIPTION OF THE DRAWINGS

FIG. 1 is a schematic diagram of the three-dimensional structure of a honeycomb curtain in an embodiment of the present application.
FIG. 2 is a partial side view of FIG. 1.
FIG. 3 is a schematic diagram of the explosion structure in FIG. 2.
FIG. 4 is a partial side view of a honeycomb curtain in another embodiment of the present application.
FIG. 5 is a schematic diagram of the explosion structure in FIG. 4.
FIG. 6 is a partial side view of a honeycomb curtain in another embodiment of the present application.
FIG. 7 is a partial side view of a honeycomb curtain in another embodiment of the present application.
FIGS. 8a to 8e are schematic diagrams of a manufacturing process of a honeycomb curtain in an embodiment of the present application.

### DETAILED DESCRIPTION OF THE EMBODIMENTS

The following will provide a further detailed description of the specific implementations of the present application in conjunction with the accompanying drawings and embodiments. The following embodiments are used to illustrate the present application, but are not intended to limit the scope of the present application.

The terms "first", "second", "third", "fourth", etc. (if any) in the specification and claims of the present application are only used to distinguish similar objects, and are not intended to be used to describe a specific sequence or order.

The terms "up", "down", "left", "right", "front", "back", "top", "bottom" (if any) mentioned in the specification and claims of the present application are defined based on the position of the structure in the figures and the position between the structures in the figures, only for the clarity and convenience of expressing the technical solution. It should be understood that the use of these directional words should not limit the scope of protection in the present application.

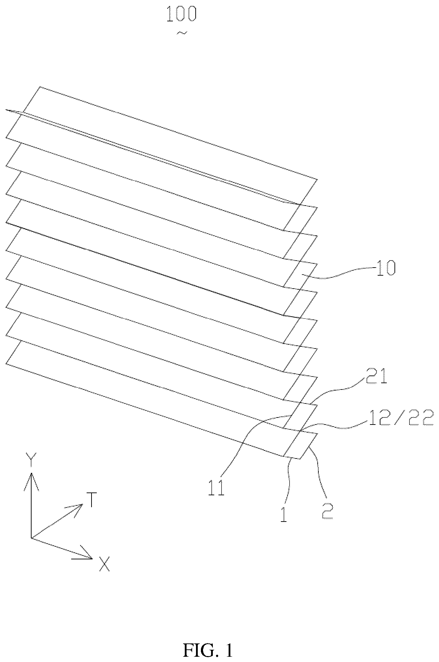

As shown in FIGS. 1 to 3, the honeycomb curtain 100 provided in the embodiment of this application includes at least one first fabric layer 1 and at least one second fabric layer 2. The first fabric layer 1 and the second fabric layer 2 are arranged opposite to each other along a thickness direction T of the honeycomb curtain 100.

Each first fabric layer 1 includes multiple sequentially connected first folding units 11, the first folding units 11 bend and protrude along the thickness direction T towards the side away from the second fabric layer 2, and a first folding edge 12 is provided at the connection position of every two adjacent first folding units 11.

Each second fabric layer 2 includes multiple sequentially connected second folding units 21, the second folding units 21 bend and protrude along the thickness direction T towards the side away from the first fabric layer 1, and a second folding edge 22 is provided at the connection position of every two adjacent second folding units 21.

The multiple first folding units 11 of the first fabric layer 1 correspond one-to-one with the multiple second folding units 21 of the second fabric layer 2, and the first folding edges 12 of the first fabric layer 1 correspond one-to-one with the second folding edges 22 of the second fabric layer 2. Each first folding edge 12 is connected to a corresponding second folding edge 22, and each first folding unit 11 is enclosed with a corresponding second folding unit 21 to form a hollow cavity 10, wherein the hollow cavity 10 can play a role in insulation and heat preservation.

The honeycomb curtain 100 provided in the embodiment of this application includes a first fabric layer 1 and a second fabric layer 2. The first folding edges 12 of the first fabric layer 1 are respectively connected to the second folding edges 22 of the second fabric layer 2, and the first folding units 11 and the corresponding second folding units 21 are enclosed to form hollow cavities 10, thereby forming the curtain body of the honeycomb curtain 100. The honeycomb curtain 100 is composed of a first fabric layer 1 and a second fabric layer 2 connected to each other. Compared with the traditional structure of the multiple quadrilateral or hexagonal unit curtain bodies bonded together, the honeycomb curtain 100 has better structural integrity, not only the structure is stable and reliable, improving the service life of the honeycomb curtain, but also the production process is greatly simplified, improving the production efficiency and saving the production costs.

As shown in FIGS. 1 to 3, as one embodiment, the multiple first folding units 11 of the first fabric layer 1 are arranged sequentially along a first direction Y, and the multiple second folding units 21 of the second fabric layer 2 are arranged sequentially along the first direction Y. The first folding edges 12 of the first fabric layer 1 and the second folding edges 22 of the second fabric layer 2 extend along a second direction X; specifically, the first direction Y is perpendicular to the second direction X.

As shown in FIGS. 1 to 3, as one embodiment, one of the first direction Y and the second direction X is the width direction of the honeycomb curtain 100, and the other is the length direction of the honeycomb curtain 100. Generally, the first direction Y is the length direction of the honeycomb curtain 100, and the second direction X is the width direction of the honeycomb curtain 100.

As shown in FIGS. 1 to 3, as one embodiment, the first direction Y is a vertical direction, and the second direction X is a horizontal direction.

As shown in FIGS. 1 to 3, as one embodiment, the dimensions of the first fabric layer 1 and the second fabric layer 2 along the first direction Y and the second direction X are the same (i.e., the length and width dimensions are the same). Each first folding edge 12 can be connected to a corresponding second folding edge 22 at some positions, or they can be connected at all positions.

As shown in FIGS. 1 to 3, as one embodiment, the shape and size of the first folding units 11 of the first fabric layer 1 are the same, and the shape and size of the second folding units 21 of the second fabric layer 2 are the same.

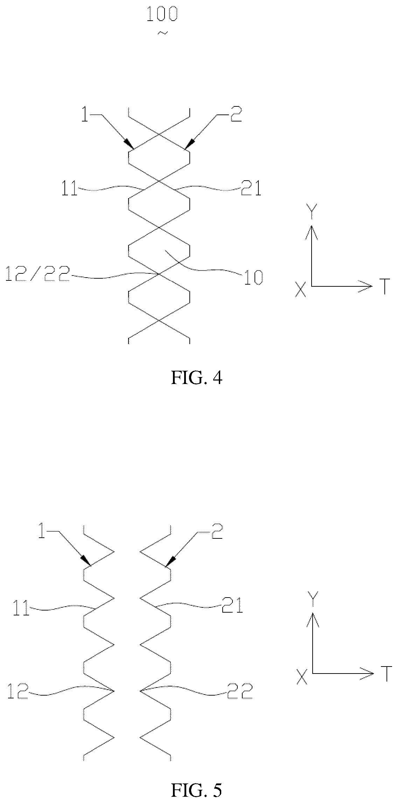

As shown in FIGS. 1 to 3, as one embodiment, the cross-section of the first folding units 11 is a V-shaped structure, and the cross-section of the second folding units 21 is also a V-shaped structure, thereby making the cross-section of the hollow cavities 10 a diamond shaped structure. As shown in FIGS. 4 and 5, as another embodiment, the cross-section of the first folding units 11 is a trapezoidal structure (i.e., a U-shaped structure), and the cross-section of the second folding units 21 is also a trapezoidal structure, thereby making the cross-section of the hollow cavities 10 a hexagonal structure. Of course, in other embodiments, the cross-sections of the first folding units 11 and the second folding units 21 may also have other shapes (such as a W-shaped structure).

As shown in FIGS. 1 to 3, as one embodiment, the shape and size of the first folding units 11 and the second folding units 21 are the same. Each first folding unit 11 and a corresponding second folding unit 21 have a symmetrical structure, that is, the first fabric layer 1 and the second fabric layer 2 have a symmetrical structure. Therefore, both sides of the honeycomb curtain 100 have the same curtain structure.

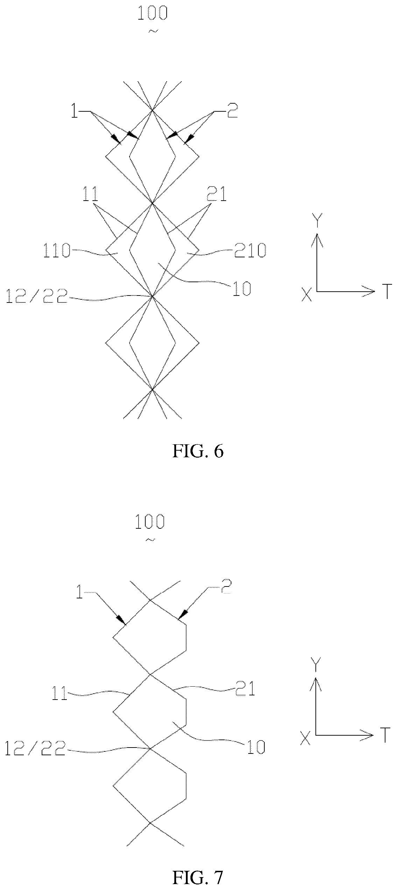

As shown in FIG. 7, as another embodiment, the shapes and/or sizes of the first folding units 11 and the second folding units 21 are different. Each first folding unit 11 and a corresponding second folding unit 21 have an asymmetric structure, that is, the first fabric layer 1 and the second fabric layer 2 have an asymmetric structure, resulting in different curtain structures on both sides of the honeycomb curtain 100. For example, the cross-section of the first folding units 11 is a V-shaped structure, and the cross-section of the second folding units 21 is a trapezoidal structure. When in use, the user can choose one of the first fabric layer 1 and the second fabric layer 2 to face the user, and the other to face away from the user; after using for a period of time, the user can flip over the honeycomb curtain 100 so that the back of the honeycomb curtain 100 faces the user. Since the first fabric layer 1 and the second fabric layer 2 have two different curtain structures, the user can observe curtains with different types, thereby improving aesthetics and freshness, and meeting different needs of the user.

As shown in FIGS. 1 to 3, as one embodiment, the first fabric layer 1 and the second fabric layer 2 are each only one in quantity.

As shown in FIG. 6, as another embodiment, there are multiple first fabric layers 1 and multiple second fabric layers 2. The multiple first fabric layers 1 are arranged adjacent to each other along the thickness direction T, the first folding units 11 on the multiple first fabric layers 1 correspond one-to-one with each other, and the corresponding first folding units 11 on the multiple first fabric layers 1 bend and protrude in the same direction (i.e., bend and protrude towards the side away from the second fabric layers 2). The multiple second fabric layers 2 are arranged adjacent to each other along the thickness direction T, the second folding units 21 on the multiple second fabric layers 2 correspond one-to-one with each other, and the corresponding second folding units 21 on the multiple second fabric layers 2 bend and protrude in the same direction (i.e., bend and protrude towards the side away from the first fabric layers 1). The first folding edges 12 on the multiple first fabric layers 1 are connected to the corresponding second folding edges 22 on the multiple second fabric layers 2.

Specifically, each of the first fabric layer 1 and the second fabric layer 2 can be two, so that the honeycomb curtain 100 forms a four layer fabric structure; alternatively, each of the first fabric layer 1 and the second fabric layer 2 can be three, so that the honeycomb curtain 100 forms a six layer fabric structure. Of course, each of the first fabric layer 1 and the second fabric layer 2 can be even more. The quantities of the first fabric layer 1 and the second fabric layer 2 can be equal or not equal. By providing multiple first fabric layers 1 and multiple second fabric layers 2, not only the thickness of the honeycomb curtain 100 is increased, improving the thermal insulation performance and structural strength of the honeycomb curtain 100, but also the honeycomb curtain 100 has a stronger sense of layering, improving its aesthetic appearance.

As shown in FIG. 6, as one embodiment, there is a first gap 110 between corresponding first folding units 11 of every two adjacent first fabric layers 1, and there is a second gap 210 between corresponding second folding units 21 of every two adjacent second fabric layers 2. As a result, in addition to the hollow cavities 10 formed between the innermost first fabric layer 1 and the innermost second fabric layer 2 in the honeycomb curtain 100, gaps are also formed between adjacent first fabric layers 1 and between adjacent second fabric layers 2, thereby forming a multi-layer cavity structure inside the honeycomb curtain 100, further improving the thermal insulation performance of the honeycomb curtain 100.

As shown in FIG. 6, as one embodiment, the material of the multiple first fabric layers 1 can be the same or different; the material of the multiple second fabric layers 2 can be the same or different. For example, the materials of the first fabric layer 1 and the second fabric layer 2 that are located on the outer side may be relatively hard, while the materials of the first fabric layer 1 and the second fabric layer 2 that are located on the inner side may be relatively soft.

As one embodiment, each first folding edge 12 is connected to a corresponding second folding edge 22 through ultrasonic bonding, and the two can be connected together using an ultrasonic bonding device. Specifically, the ultrasonic bonding device adopts and transmits high-frequency vibration waves to the surfaces of two or more materials that need to be connected, and under pressure, the material surfaces are caused to rub against each other to form fusion between molecular layers, thereby achieving fusion between fabrics. Of course, each first folding edge 12 and a corresponding second folding edge 22 can also be fixedly connected by hot pressing or adhesive bonding (such as glue bonding).

As one embodiment, the materials of the first fabric layer 1 and the second fabric layer 2 can be various fabrics such as cotton, linen, polyester, blended fabric, gauze, flannelette, etc.

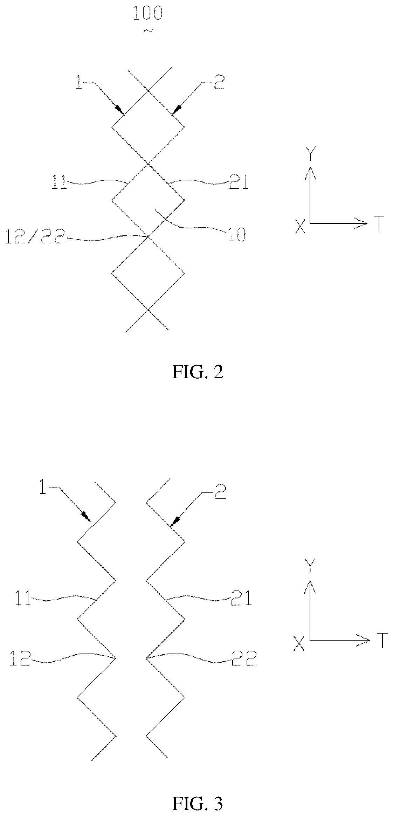

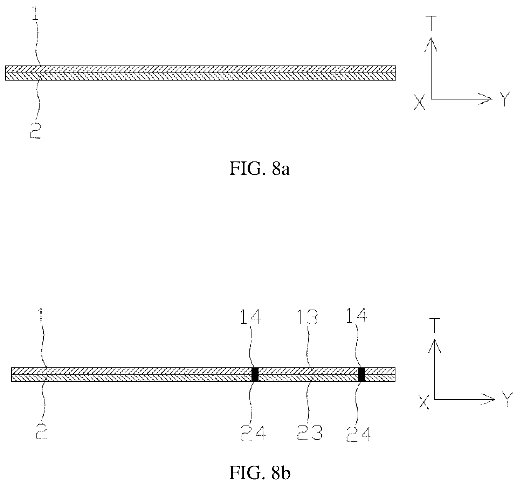

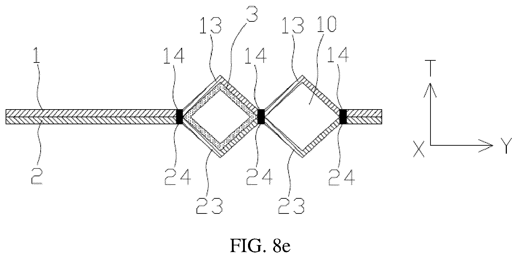

As shown in FIGS. 8a to 8e, the embodiment of this application further provides a manufacturing method of a honeycomb curtain, used to make the honeycomb curtain 100 mentioned above. The manufacturing method of the honeycomb curtain includes the following steps:
S10: providing at least one first fabric layer 1 and at least one second fabric layer 2, wherein the first fabric layer 1 and the second fabric layer 2 are both flat structures. Specifically, the first fabric layer 1 includes multiple first body portions 13 and multiple first bonding portions 14. The multiple first body portions 13 and the multiple first bonding portions 14 are alternately arranged along the first direction Y, and the first body portions 13 and the first bonding portions 14 extend along the second direction X; along the first direction Y, the width of the first bonding portions 14 is much smaller than the width of the first body portions 13. The second fabric layer 2 includes multiple second body portions 23 and multiple second bonding portions 24. The multiple second body portions 23 and the multiple second bonding portions 24 are alternately arranged along the first direction Y, and the second body portions 23 and the second bonding portions 24 extend along the second direction X; along the first direction Y, the width of the second bonding portions 24 is much smaller than the width of the second body portions 23. The multiple first body portions 13 respectively correspond to the multiple second body portions 23, and the multiple first bonding portions 14 respectively correspond to the multiple second bonding portions 24; the first direction Y is perpendicular to the second direction X;
S20: connecting each first bonding portion 14 of the first fabric layer 1 to a corresponding second bonding portion 24 of the second fabric layer 2, so that the position where the first bonding portion 14 and the second bonding portion 24 are connected forms a bonding line (not labeled) extending along the second direction X; and bending and shaping each first body portion 13 and each second body portion 23, so that each first body portion 13 and the corresponding second body portion 23 are bent and protruded in opposite directions to form a hollow cavity 10 therebetween, thus obtaining a honeycomb curtain 100. Combining FIG. 8e and FIG. 2, the first body portion 13 forms the first folding unit 11 after bending and protruding, and the first bonding portion 14 corresponds to the first folding edge 12; the second body portion 23 forms the second folding unit 21 after bending and protruding, and the second bonding portion 24 corresponds to the second folding edge 22. The above-mentioned bonding line corresponds to the first folding edge 12 and the second folding edge 22.

The manufacturing method of the honeycomb curtain is not only simple in process, high in production efficiency, and can save production costs, but also the produced honeycomb curtain 100 has better overall integrity, higher structural stability, and longer service life. Meanwhile, the shape and size of the mold 3 can be adjusted according to product requirements, so as to obtain honeycomb curtains 100 with different shapes and sizes.

As one embodiment, in the above step S20, each first bonding portion 14 can be connected to the corresponding second bonding portion 24 through ultrasonic bonding, and the two can be connected together using an ultrasonic bonding device. Each first bonding portion 14 can also be connected to the corresponding second bonding portion 24 through methods such as hot pressing (specifically, by using a hot pressing device to connect the two together) or adhesive bonding (such as glue bonding, and specifically, by using a glue coating device to connect the two together).

As shown in FIGS. 8b to 8d, as one embodiment, in the above step S20, bending each first body portion 13 and each second body portion 23 specifically includes:

placing a mold 3 between each first body portion 13 and the corresponding second body portion 23, with the mold 3 located between two adjacent bonding lines, and heating the mold 3 to a preset temperature (wherein connecting the first bonding portion 14 to a corresponding second bonding portion 24, placing the mold 3 between the first body portion 13 and the second body portion 23, and heating the mold 3 to a preset temperature, these three steps are not limited in the sequence), so that the first body portion 13 and the second body portion 23 are pushed apart by the mold 3 (i.e., the first body portion 13 and the second body portion 23 are shaped like the surface of the mold 3, wherein before the mold 3 is provided, the first body portion 13 and the second body portion 23 are in contact with each other; after placing the mold 3 between the first body portion 13 and the second body portion 23, the first body portion 13 and the second body portion 23 are pushed apart), and the first body portion 13 and the second body portion 23 are shaped under the heating action of the mold 3 (i.e., shaping the first body portion 13 and the second body portion 23 by heat, wherein heat shaping is the use of thermal energy to heat the fiber product to form a certain shape and size). Specifically, the heating temperature of the mold 3 can be determined by the materials of the first fabric layer 1 and the second fabric layer 2, for example, it can be between 110°C and 170°C.

Specifically, in this embodiment, the cross-section of the mold 3 is a diamond shaped structure, so that the cross-section of the first body portion 13 and the second body portion 23 is a V-shaped structure, and the cross-section of the hollow cavity 10 is a diamond shaped structure. Of course, in other embodiments, the shape and size of the mold 3 can be adaptively adjusted according to the shape and size of the desired products. For example, the cross-section of the mold 3 can also be hexagonal, irregular, or other structures. Further, when there are multiple first fabric layers 1 and multiple second fabric layers 2, the first bonding portions 14 of the multiple first fabric layers 1 can be connected to the second bonding portions 24 of the multiple second fabric layers 2 first, and then a special mold 3 can be used to shape the first body portions 13 of the multiple first fabric layers 1 and the second body portions 23 of the multiple second fabric layers 2 at once.

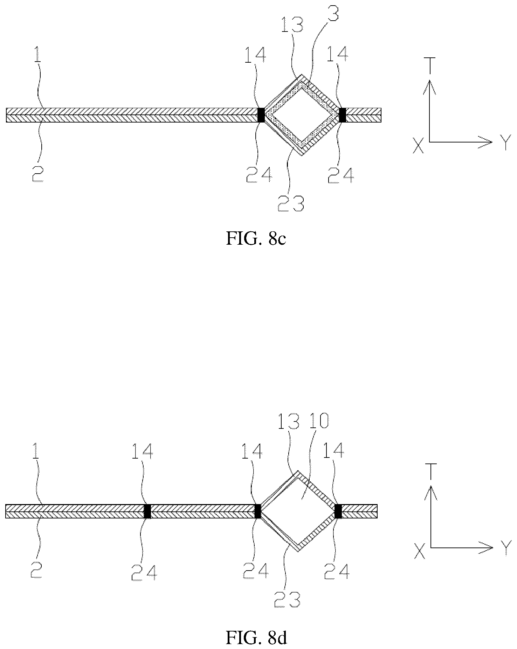

As shown in FIGS. 8a to 8e, the manufacturing method of the honeycomb curtain can specifically include the following steps:
(1) as shown in FIG. 8a, stacking the first fabric layer 1 and the second fabric layer 2 with one on another;
(2) as shown in FIG. 8b, connecting adjacent two first bonding portions 14 of the first fabric layer 1 respectively with corresponding adjacent two second bonding portions 24 of the second fabric layer 2 to form two bonding lines, i.e., a first bonding line and a second bonding line;
(3) as shown in FIG. 8c, placing a mold 3 between the first body portion 13 and the second body portion 23, with the mold 3 located between the first bonding line and the second bonding line, and heating the mold 3 to a preset temperature, so that the first body portion 13 and the second body portion 23 are pushed apart and shaped by the mold 3; after shaping, removing the mold 3;
(4) as shown in FIG. 8d, connecting another first bonding portion 14 of the first fabric layer 1 with another corresponding second bonding portion 24 of the second fabric layer 2 to form a third bonding line;
(5) as shown in FIG. 8e, placing a mold 3 between the first body portion 13 and the second body portion 23, with the mold 3 located between the second bonding line and the third bonding line, and heating the mold 3 to a preset temperature, so that the first body portion 13 and the second body portion 23 are pushed apart and shaped by the mold 3; after shaping, removing the mold 3;
(6) repeating steps (4) and (5) until the first bonding portions 14 and the second bonding portions 24 are all connected together, and the first body portions 13 and the second body portions 23 are all pushed apart and shaped, thus obtaining the honeycomb curtain 100.

It should be noted that this embodiment uses a mold 3 to shape the multiple first body portions 13 and the multiple second body portions 23 (i.e., after each shaping, the mold 3 needs to be removed from the hollow cavity 10, and then, the mold 3 is used to shape the next first body portion 13 and the next second body portion 23); in other embodiments, multiple molds 3 can also be used, after shaping the multiple first body portions 13 and the multiple second body portions 23, all the molds 3 are removed at once. This embodiment involves connecting the first bonding portion 14 and the corresponding second bonding portion 24 and shaping the first body portion 13 and the corresponding second body portion 23 alternately; in other embodiments, it is also possible to first connect all the first bonding portions 14 and the second bonding portions 24 together, and then shape the first body portions 13 and the second body portions 23.

As another embodiment, in the above step S20, bending each first body portion 13 and each second body portion 23 specifically includes:
bending each first body portion 13 and each second body portion 23 using a bending device (such as a corrugating device), so that each first body portion 13 and each second body portion 23 are bent, and heating and shaping the first body portion 13 and the second body portion 23 using the bending device. The heating temperature of the bending device can be determined by the materials of the first fabric layer 1 and the second fabric layer 2, for example, it can be between 110°C and 170°C.

Specifically, in actual manufacturing process, a bending device can be used to first bend each first body portion 13 of the first fabric layer 1 and each second body portion 23 of the second fabric layer 2 into shapes, and then, a bonding device (such as ultrasonic bonding device, hot pressing device, glue coating device, etc.) can be used to connect each first bonding portion 14 with a corresponding second bonding portion 24; alternatively, each first body portion 13 and each second body portion 23 can be bent into shape using a bending device, while each first bonding portion 14 can be connected to a corresponding second bonding portion 24 using a bonding device (in this case, the bending device and the bonding device can be two separate devices or integrated into one device).

The honeycomb curtain 100 provided in the embodiment of this application includes a first fabric layer 1 and a second fabric layer 2. The first folding edges 12 of the first fabric layer 1 are respectively connected to the second folding edges 22 of the second fabric layer 2, and the first folding units 11 and the corresponding second folding units 21 are enclosed to form hollow cavities 10, thereby forming the curtain body of the honeycomb curtain 100. The honeycomb curtain 100 is composed of a first fabric layer 1 and a second fabric layer 2 connected to each other. Compared with the traditional structure of the multiple quadrilateral or hexagonal unit curtain bodies bonded together, the honeycomb curtain 100 has better structural integrity, not only the structure is stable and reliable, improving the service life of the honeycomb curtain, but also the production process is greatly simplified, improving the production efficiency and saving the production costs.

The above are only the specific embodiments of the present application, but the scope of protection of the present application is not limited to this. Any technical personnel familiar with this technical field who can easily think of changes or replacements within the scope of technology disclosed in the present application should be covered within the scope of protection of the present application. Therefore, the protection scope of the present application should be based on the protection scope of the claims.

## Claims

1. A honeycomb curtain comprising at least one first fabric layer (1) and at least one second fabric layer (2), wherein the first fabric layer (1) and the second fabric layer (2) are arranged opposite to each other along a thickness direction (T) of the honeycomb curtain (100);
each first fabric layer (1) comprises multiple sequentially connected first folding units (11), the first folding units (11) bend and protrude towards the side away from the second fabric layer (2), and a first folding edge (12) is provided at a connection position of every two adjacent first folding units (11);
each second fabric layer (2) comprises multiple sequentially connected second folding units (21), the second folding units (21) bend and protrude towards the side away from the first fabric layer (1), and a second folding edge (22) is provided at a connection position of every two adjacent second folding units (21);
the multiple first folding units (11) correspond one-to-one with the multiple second folding units (21), and the first folding edges (12) correspond one-to-one with the second folding edges (22); each first folding edge (12) is connected to a corresponding second folding edge (22), and each first folding unit (11) is enclosed with a corresponding second folding unit (21) to form a hollow cavity (10).

2. The honeycomb curtain as claimed in claim **1,** wherein the multiple first folding units (11) are arranged sequentially along a first direction (Y), the multiple second folding units (21) are arranged sequentially along the first direction (Y), the first folding edges (12) and the second folding edges (22) extend along a second direction (X), wherein the first direction (Y) is perpendicular to the second direction (X).

3. The honeycomb curtain as claimed in claim **2,** wherein one of the first direction (Y) and the second direction (X) is a width direction of the honeycomb curtain, and the other is a length direction of the honeycomb curtain.

4. The honeycomb curtain as claimed in claim **1,** wherein the cross-section of the first folding units (11) is V-shaped or trapezoidal, and the cross-section of the second folding units (21) is V-shaped or trapezoidal.

5. The honeycomb curtain as claimed in claim **1,** wherein each first folding unit (11) and a corresponding second folding unit (21) have a symmetrical structure.

6. The honeycomb curtain as claimed in claim **1,** wherein each first folding unit (11) and a corresponding second folding unit (21) have an asymmetric structure.

7. The honeycomb curtain as claimed in claim **1,** wherein each first folding edge (12) is connected to a corresponding second folding edge (22) through ultrasonic bonding, hot pressing, or adhesive bonding.

8. The honeycomb curtain as claimed in any one of claims **1** to **7,** wherein there are multiple first fabric layers (1) and multiple second fabric layers (2), wherein the multiple first fabric layers (1) are arranged adjacent to each other along the thickness direction (T), and the first folding units (11) on the multiple first fabric layers (1) correspond one-to-one with each other; the multiple second fabric layers (2) are arranged adjacent to each other along the thickness direction (T), and the second folding units (21) on the multiple second fabric layers (2) correspond one-to-one with each other.

9. The honeycomb curtain as claimed in claim **8,** wherein there is a first gap (110) between corresponding first folding units (11) of every two adjacent first fabric layers (1), and there is a second gap (210) between corresponding second folding units (21) of every two adjacent second fabric layers (2).

10. A manufacturing method of a honeycomb curtain, used for manufacturing the honeycomb curtain as claimed in any one of claims **1** to **9,** wherein the manufacturing method of the honeycomb curtain comprises the following steps:
S10: providing at least one first fabric layer (1) and at least one second fabric layer (2); wherein the first fabric layer (1) comprises multiple first body portions (13) and multiple first bonding portions (14), the multiple first body portions (13) and the multiple first bonding portions (14) are alternately arranged along a first direction (Y), and the first bonding portions (14) extend along a second direction (X); the second fabric layer (2) comprises multiple second body portions (23) and multiple second bonding portions (24), the multiple second body portions (23) and the multiple second bonding portions (24) are alternately arranged along the first direction (Y), and the second bonding portions (24) extend along the second direction (X); the multiple first body portions (13) respectively correspond to the multiple second body portions (23), and the multiple first bonding portions (14) respectively correspond to the multiple second bonding portions (24); the first direction (Y) is perpendicular to the second direction (X);
S20: connecting each first bonding portion (14) to a corresponding second bonding portion (24), and bending each first body portion (13) and each second body portion (23) so that each first body portion (13) and a corresponding second body portion (23) are bent and protruded in opposite directions to form a hollow cavity (10) therebetween, thus obtaining a honeycomb curtain (100); wherein the first body portion (13) forms the first folding unit (11) after bending and protruding, and the first bonding portion (14) corresponds to the first folding edge (12); the second body portion (23) forms the second folding unit (21) after bending and protruding, and the second bonding portion (24) corresponds to the second folding edge (22).

11. The manufacturing method of the honeycomb curtain as claimed in claim **10,** wherein in step S20, each first bonding portion (14) is connected to the corresponding second bonding portion (24) through ultrasonic bonding, hot pressing, or adhesive bonding.

12. The manufacturing method of the honeycomb curtain as claimed in claim **10** or **11,** wherein in step S20, bending each first body portion (13) and each second body portion (23) specifically comprises:
placing a mold (3) between each first body portion (13) and the corresponding second body portion (23), and heating the mold (3) to a preset temperature, so that the first body portion (13) and the second body portion (23) are pushed apart by the mold (3), and the first body portion (13) and the second body portion (23) are shaped under the heating action of the mold (3).

13. The manufacturing method of the honeycomb curtain as claimed in claim **10** or **11,** wherein in step S20, bending each first body portion (13) and each second body portion (23) specifically comprises:
bending each first body portion (13) and each second body portion (23) using a bending device, so that each first body portion (13) and each second body portion (23) are bent, and heating and shaping the first body portion (13) and the second body portion (23) using the bending device.
